(19) Europäisches Patentamt
European Patent Office
Office européen des brevets

(11) EP 2 757 516 A1

(12) **EUROPEAN PATENT APPLICATION**

(43) Date of publication:
23.07.2014 Bulletin 2014/30

(51) Int Cl.:
*G06Q 30/02* (2012.01)

(21) Application number: 13171382.8

(22) Date of filing: 11.06.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 18.01.2013 US 201313745343

(71) Applicant: Linkedin Corporation
Mountain View, California 94043 (US)

(72) Inventors:
• Dubey, Sanjay S.
Mountain View, CA California 94043 (US)
• Agarwal, Deepak
Mountain View, CA California 94043 (US)
• Ghosh, Souvik
Mountain View, CA California 94043 (US)
• Wei, Kai
Mountain View, CA California 94043 (US)

(74) Representative: Davies, Simon Robert et al
D Young & Co LLP
120 Holborn
London, EC1N 2DY (GB)

(54) **System and method for serving electronic content**

(57)     A system and methods are provided for serving content in response to content queries or requests. When a request is received, for content to be presented to a specified user, candidate content items are identified, possibly based on matches between attributes of the user and attributes of the items' target audiences. For each item, a history indicating the frequency (e.g., total number) and/or recency with which impressions of the candidate item were previously presented to the user is retrieved and used to determine a modifier value, which is applied to a calculated or generated probable click-through-rate (pCTR) to produce a modified probability that the user would act on the item if it is served to him or her. Each item's estimated value is computed by multiplying a bid associated with the item and the modified probability; the results are ranked and the top-ranked item(s) are served.

FIG. 1

# Description

## Field of the Invention

This invention relates to computer systems and data processing. In particular, a system and methods are provided for serving electronic content items.

## Background of the Invention

Many types of electronic content are served and presented to users of communication and computing devices such as smart phones, laptop computers, desktop computers, etc. The content may include images, video, audio, text, graphics and so on.

Depending on the application that is operated by the user and to/for which the content is served, such as a web browser, the content may include an entire page or screen of content (e.g., a web page) or just one or more components of a page or screen. Such components may include discrete content items such as advertisements, news articles, status updates of friends or associates of the user, announcements issued by a provider of the application or of a web site visited by the user, etc.

Unfortunately, some existing systems for serving content to users may present a single content item to one user multiple times, to the point that it becomes annoying and the user ignores it and any message it conveys. These types of systems may make no attempt to avoid over-exposure of a given content item.

On the other hand, however, a user may be less likely to act on a particular content item (e.g., by requesting more information, by viewing a larger or better version of the item) until he or she has seen or experienced it multiple times. For this reason, some other systems adhere to an "all-or-none" principle. These systems may stop serving a particular item to a given user after it is served to that user some threshold number of times, but then resume serving the item after some period of time. Thus, for some period of time, the item is completely barred from being served to the user, even if it is the most relevant item for the user and/or would generate the most revenue for the system.

Another problem with some content-serving systems that serve sponsored content (e.g., content that providers pay to have served) is that they don't manage the content provider's budget well. For example, a provider of sponsored content may have a daily budget (or a budget for some other period of time) that it is willing to pay to have the content served. A poorly designed system may expend the entire daily budget in a relatively short span of time, and only reach a small portion of a target audience.

## Summary

Aspects of the present invention are set out in the claims.

In some embodiments, a system and methods are provided for controlling the serving of a campaign or a particular electronic content item so that a budget associated with the campaign or item is expended over much or all of the time period associated with the budget (e.g., one day), and proportional to activity of a target audience of the campaign or content item. The system may comprise a social networking service, a web server, a portal and/or some other type of service that serves content, and the content served from the system may be of one or more types (e.g., advertisements, résumés, status updates, job listings).

If a content item (or set of content items, such as a campaign) is being served too frequently, and its budget is being consumed relatively rapidly, the item's ranking or estimated revenue may be decreased to reduce the likelihood of it being served. Conversely if a content item (or set of content items) is being served too infrequently, its ranking or estimated revenue may be increased to improve its likelihood of being served. Alternatively, a content item's consideration for serving in response to a request for content may be probabilistic, meaning that it may sometimes not be considered. These adjustments may be made by altering a pacing factor associated with the item(s).

In some embodiments, a target or desired pattern of expenditure for a content item's budget is determined based on past activity of the item's target audience (e.g., visits to the site by the audience, pages served to the audience, content items served to the audience). For example, past activity of the target audience may be tracked and used to generate a forecast or estimate of total target audience activity for a future period (e.g., a day).

Within each of multiple intervals of time (e.g., one hour, fifteen minutes) during the forecast period, the system calculates the content item's fair share of activity. For example, if the total number of impressions of the content item that need to be served in order to exhaust the item's budget for the forecast period is 1% of the target audience's expected activity during the period, the system may attempt to make the content item's activity during each interval amount to 1% of the target audience's activity during that interval.

By attempting to match a content item's daily budget expenditure to the activity of its target audience, the content item's budget may last through much of the day and possibly allow the item to reach more members of that audience that it would otherwise reach. In addition, during time intervals that the target audience is more (or less) active, the system supports more (or less) activity by the content item (e.g., the serving of more or fewer impressions of the content item).

In some implementations, a user data store is maintained to record serving activity of the system. For example, the system may record, for each user, each content item and for each serving of content to a user (or for presentation to a user), which content item was served and when it was served. Thus, the system is able to track how many times any content item was served or presented to any user, when it was most recently served, etc. Each serving or presentation of a content item for a user may be considered an "impression."

**Brief Description of the Drawings**

The present invention will be described further, by way of example only, with reference to preferred embodiments thereof as illustrated in the accompanying drawings, in which:

FIG. 1 is a block diagram depicting a system for serving electronic content, in accordance with some embodiments of the invention.
FIG. 2 is a flow chart illustrating a method of serving electronic content, in accordance with some embodiments of the invention.
FIG. 3A is a graph demonstrating an illustrative historical record of user actions on impressions of content items.
FIG. 3B is the graph of FIG. 3A indicating probability multipliers that may be associated with different ordinal impressions of a content item, according to some embodiments of the invention.
FIG. 4 is a diagram of a data structure for determining a probability modifier, in accordance with some embodiments of the invention.
FIG. 5 is a diagram of a system for serving electronic content, according to some embodiments of the invention.
FIG. 6 is a flow chart illustrating a method of pacing the serving of impressions of a content item, according to some embodiments of the invention.
FIG. 7A is a graph of the estimated or predicted activity of a target audience for one daily budget period, in accordance with some embodiments of the invention.
FIG. 7B is a graph of a target pattern of expenditure of the daily budget of a content item having the target audience reflected in graph 700 of FIG. 7A, in accordance with some embodiments of the invention.
FIG. 8 is a diagram of a system for serving electronic content, according to some embodiments of the invention.

**Detailed Description**

The following description is presented to enable any person skilled in the art to make and use the invention. Various modifications to the disclosed embodiments will be readily apparent to those skilled in the art, and the general principles defined herein may be applied to other embodiments and applications without departing from the scope of the present invention. Thus, the present invention is not intended to be limited to the embodiments shown.

In some embodiments of the invention, a system and method are provided for serving electronic content. The content may be any type of electronic data formatted for presentation via a web browser or some other application program or user interface. The content may include complete compositions presented individually, such as web pages, documents or videos, or may be components that can be presented as part of a web page or other composition, such as advertisements, job listings, notifications, status updates, news, documents, sports information, images, videos and so on. In short, electronic content items that are served in embodiments of the invention may include any type of content that can be presented to a user on a communications or computing device.

Although a "content item" may refer to a discrete component or composition of content in some embodiments, in other embodiments it may refer to a collection of components or compositions. In particular, one type of content item is a "campaign" associated with a product, a service, a person, an organization or other thing. A campaign may encompass multiple graphics, videos, textual compilations or other entities that may, in and of themselves, be deemed "content items."

As used herein, the term "impression" may refer to any serving or presentation of a content item. Thus, an impression of a given content item may refer to the serving of that content item (e.g., to a web browser, to another application) in response to a request for content (or a content query) and/or the resulting presentation of that content item to a user (e.g., by the web browser or other application).

Embodiments of the invention may be implemented as part of virtually any online system or service that serves data, whether it is a social network service, a web server, a portal site, a search engine, etc.

**Introduction**

In a system described herein that serves electronic content to users and/or for presentation to users, some information about a target user to whom a content item is to be served or presented is received at the system as part of a query or request for content. For example, when a user of a social network service connects to the service's site and navigates to a particular page, a web browser or other display engine generates a query to a data server operated by the site, to identify and/or obtain content to present to the user. The content query may include or be accompanied by one or more attributes or characteristics of the user (e.g., gender, age, location, employment status).

Similarly, content items that have been stored and that are to be served to users of the system may have associated attributes that identify target audiences of the content items. For example, an advertisement designed to promote sales of a particular product, a job listing describing a new job opening, or some other item, may be received with information identifying types of users to whom the item should be presented (e.g., gender, age, location, employment status).

In response to a query or request for content for a particular user, the system searches for appropriate content, by comparing known attributes of the user to recorded attributes of the target audiences of the stored content items. One or more appropriate content items are identified and served for presentation to the user.

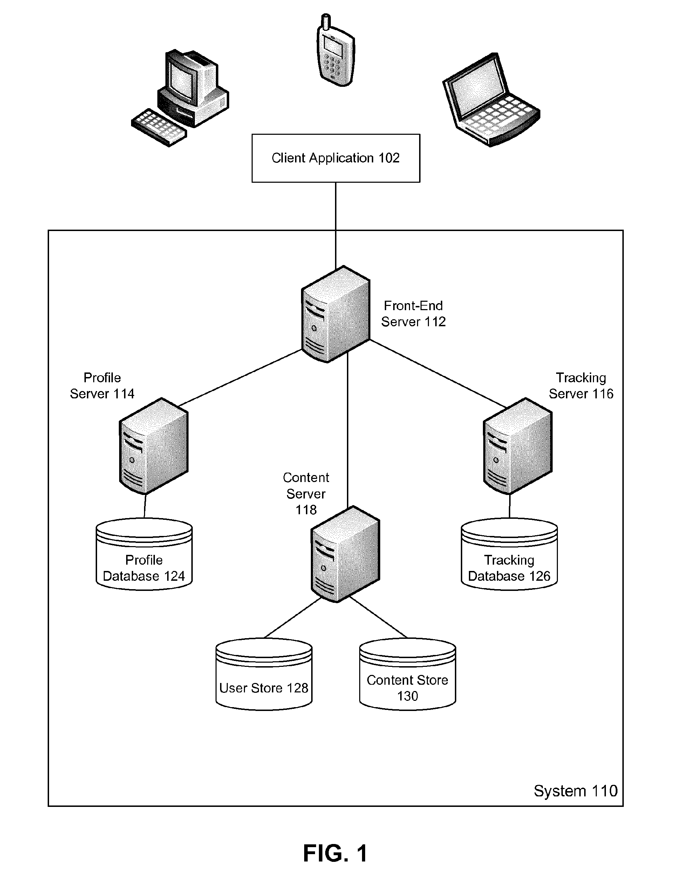

FIG. 1 is a block diagram of a system for serving content, according to some embodiments of the invention. In these embodiments, requests for content are received at front-end server 112, which may comprise a web server, application server, data server and possibly other software and/or hardware modules for serving content items in response to requests. System 110 also includes profile server 114, tracking server 116, content server 118, profile database 124, tracking database(s) 126, user data store 128 and content store 130.

System 110 may host a social networking service, a portal site, a search engine or some other service, which a user accesses via client software application 102. As part of the service, the system serves content for presentation to users via the client application. Client application 102 may be or may comprise a web browser or other application program capable of presenting content items to a user, and may execute on a portable or stationary computing or communication device operated by a user.

Profile server 114 maintains profiles, in profile database 124, of users or members of a service hosted by system 110. A user's profile may reflect any number of attributes or characteristics of the user, including personal (e.g., gender, age range), professional (e.g., job title, employer, industry), social (e.g., organizations the user is a member of, geographic area of residence), educational (e.g., degree, university attended), etc.

When a service connection or content request is received at front-end server 112 from or on behalf of a user, the system retrieves some or all data constituting the user's profile from the profile server. The profile data may be shared throughout system 110 to accompany various actions or communications, such as when content is requested from content server 118, when a record of activity is stored at tracking server 116 and/or user store 128, and so on.

Tracking server 116 monitors and records activity of system 110 (e.g., in tracking database(s) 126). For example, whenever content is served from front-end server 112 (e.g., to a client software), the tracking server records what is served, to whom (e.g., which user), and when. Similarly, the tracking server also records user actions regarding content items presented to the users (e.g., clicks, follow-on requests), to include identities of the user and the content item acted on, what action was taken, etc.

Content server 118 maintains one or more repositories of content items for serving to users (e.g., content store 130), an index of the content items, and user store 128. An illustrative means for indexing content items to facilitate their selection and serving to users is described in U.S. Patent Application No. 13/705,115, which is entitled "Apparatus and Method for Indexing Electronic Content" and is incorporated herein by reference.

User store 128 stores, for each user of system 110, a record of content items served to the user, or served for presentation to the user, and when they were served. In particular, user store 128 may be configured to allow the content server (and/or other components of system 110) to quickly determine how many previous impressions of a given content item were presented to a given user (and/or other users), when they were presented, how they were presented (e.g., how prominently or where they were presented within a web page or other page of content), and/or other information. Although some of this data may duplicate what is stored by tracking server 116, contents of user store 128 are rapidly accessible to the content server, and may be used (as described below) to help select content items to serve in response to a current content request.

When content is stored at content server 118, it may be stored with attributes, indications, characteristics and/or other information describing one or more target audiences of the content. For example, a provider of an advertisement to be served to users may identify relevant demographic attributes and desired values of target users, a provider of a job listing may identify characteristics of users that should be informed of the opening, and so on. System 110 may include other components not illustrated in FIG. 1, such as an index of the content maintained by content server 118, an analysis module operating on tracking server 116 (and/or elsewhere) to analyze stored data, and/or other components. Also, in other embodiments of the invention, functionality of a system for serving electronic content as described herein may be distributed differently.

For example, the functionality may be distributed among the illustrated components in an alternative manner, such as by merging or further dividing functions of one or more components, or may be distributed among a different collection of components. Yet further, while implemented as separate hardware components (e.g., computer servers) in FIG. 1, components such as front-end server 112, profile server 114, tracking server 116 and content server 118 may alternatively be implemented as separate software modules executing on one or more computer servers.

In some embodiments of the invention, a content-serving system manages the serving of content items so as to avoid serving a given item to a single user too frequently. In other embodiments, the system manages the serving of content items so as to extend an item's budget for a given time period (e.g., one day) over most or all of that period of time, rather than allowing it to be expended within just a relatively small fraction of that time period.

## Managing the Serving of a Single Content Item to One User

In some embodiments of the invention, a system such as system 110 of FIG. 1 serves electronic content to users or for presentation to users. The system may serve the content directly to a user-operated device executing a suitable client application (e.g., a web browser), for example, or may serve the content to an intermediate entity that then presents the content to the user.

In either scenario, when the system receives a request or query for content to be presented to a user, the system receives (or retrieves) an identity and/or a set of attributes of the user for use in selecting appropriate content. For example, the user may first login to system 110 (e.g., via front-end server 112) before requests are issued for content for the user. In this case, the requests identify the user by name, user identifier or some other indicia understood by the system.

As one alternative, a token may be stored on the user's communication or computing device and may be delivered to the system with a content request or query. Such a token may identify the user in some way (e.g., with a user identifier assigned by or known to system 110). As another alternative, when a request or query for content for presentation to the user is received at system 110, it may be accompanied by a set of attributes of the user (e.g., age range, gender, location).

In some embodiments of the invention, a system for serving content is operated in a manner that attempts to avoid serving the same content item to the same user on such a frequent basis that the user develops a negative opinion of the item, a subject or feature of the item, and/or a provider or sponsor of the item. In these embodiments, the system serves sponsored content for presentation to users - content that a provider pays to have served - and a goal is to have a sponsored content item served often enough to elicit a response from a user, but not so often that the user develops an aversion to it.

With reference to system 110 of FIG. 1, content items are stored within a repository such as content store 130 of FIG. 1, and are indexed by a content server such as server 118. Details of serving activity, such as which content item is served to which user at which time, are stored in a repository such as user store 128, tracking database 126 and/or elsewhere.

Users' behavior regarding content items served/presented to them is also recorded. A user's behavior may include clicking on a content item, requesting more information regarding a subject of the content item, requesting re-presentation of the item, and/or other activity that reflects an interest in the content item, a theme or subject of the content item or a provider of the item.

Thus, the system maintains historical data regarding how often and when a particular content item was served, to whom it was served, and what action a user that received the content item did in response. For example, if a user acts on a content item, the system may record that action, which content item was acted upon, which impression of the content item resulted in the action (e.g., 1st, 4th, 7th), and/or other details.

The system may not only record what content items were served to a user in response to a particular request, but may also record where/how they were presented to the user. In particular, content items served by the system may be presented at specific locations within pages of content navigated by a user or otherwise displayed to the user. Those locations may be identified in the content requests, in which case the system may note where each item is presented.

Presentation locations may illustratively comprise x/y coordinates or relative positions/orientations within a page, such as "top" (e.g., at the top of the page), "right margin," "lower left" and so on. The coordinates, general locations, ratings of the locations (e.g., indicating their relative values or desirability) and/or other indicia of the content item locations may be used to determine a prominence with which a content item is presented, the likelihood that a user will see the content item, and/or other factors.

For example, a content item presented in a large, rectangular, banner-type slot at the top of a page is more prominent and therefore more likely to be observed and viewed by a user (and can be more easily acted on) than another content item presented in a small, square slot at the lower right-hand margin of the page. As will be discussed below, the prominence with which a content item is presented to a user may be considered when determining whether the user is likely to act upon the content item (e.g., by clicking on it) or whether the user may be becoming fatigued by presentations of the content item.

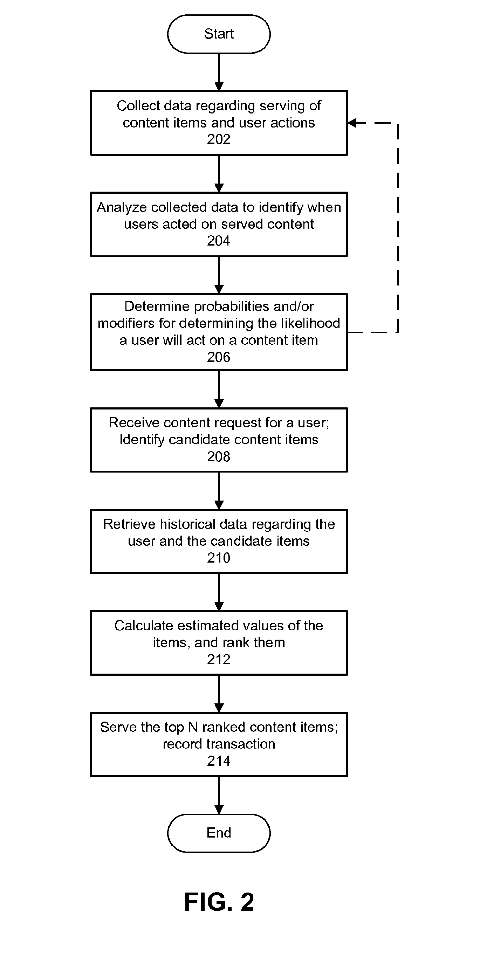

FIG. 2 is a flow chart demonstrating a method of serving electronic content to a user, according to some embodiments of the invention. In this method, multiple content items considered for serving in response to a content request are ranked according to their estimated/expected values or revenues.

The estimated values may be calculated in part on a probability or probabilities that the user that will receive the content item(s), or a generic user, would act upon the item(s) (e.g., by clicking on them). Such a probability may be modified based on the number of, and/or recency with which, previous impressions of the content item(s) were served to the user.

In operation 202, data are collected over time regarding the serving of multiple content items to multiple users. As indicated above, each serving of each content item may be recorded, along with a time/date of the serving, a location at which the item was presented (e.g., a position within a page of content), the user to whom the content item was presented, and any action taken by the user regarding the item.

Data may continue to be collected during execution of the illustrated method and afterward. In particular, the data may be continually updated as content items continue to be served by the content-serving system and as new content items are received and stored for serving.

In operation 204, collected data are analyzed to determine when users have historically acted upon or been most receptive to the content items that were served. Different analyses or operations may be performed in different embodiments of the invention.

In one analysis, for each user click on an impression of a content item (or some other user action), it is determined which ordinal presentation of that content item to that user resulted in the action (e.g., $3^{rd}$ impression, $5^{th}$ impression). This may be repeated for some or all content items.

The results may be graphed or otherwise aggregated. In an illustrative graph, ordinal numbers of impressions of content items may comprise one axis (e.g., the x-axis), while the other axis (e.g., the y-axis) represents numbers of users who acted on a content item. As one alternative, instead of absolute numbers of users, the other axis may represent, out of all users who acted on a content item, percentages of those users who acted upon a particular ordinal impression of the content item.

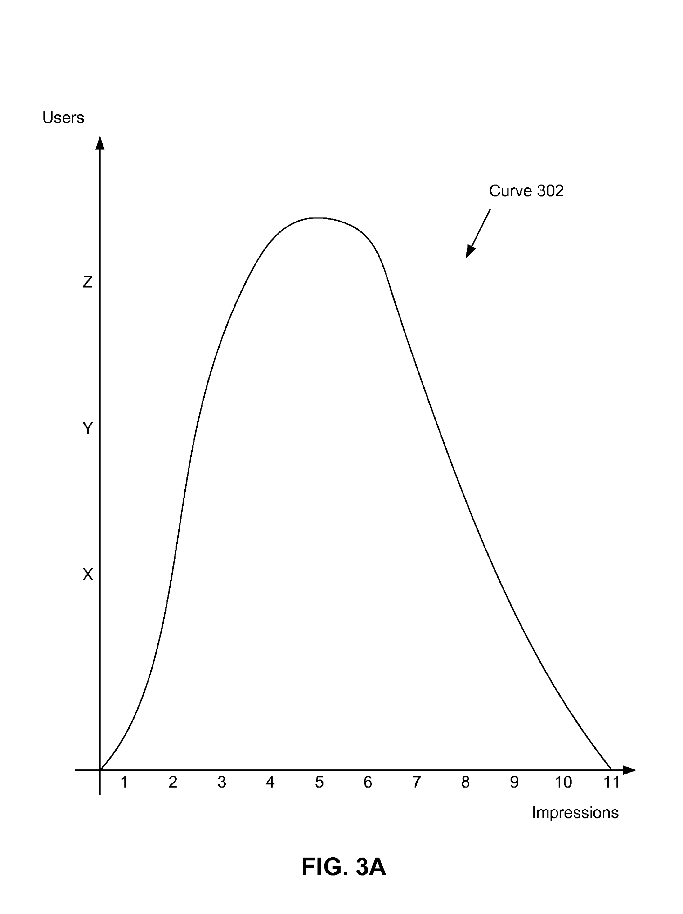

FIG. 3A demonstrates such a graph, wherein all content items that were acted on received such action between 1 and 11 impressions. X, Y and Z may represent numbers or percentages of users that took action at particular ordinal impressions of the items. In this illustrative curve, most users acted on content items between the $4^{th}$ and the $6^{th}$ presentations of the item to the user.

In different embodiments of the invention, and as introduced above, data for different combinations of users and/or content items may be graphed and/or analyzed separately. For example, the graph of FIG. 3A may encompass actions on all content items served by the content-serving system, to all users, over some period of time. As one alternative, the data used to generate a graph may encompass just content items that have one or more common attributes or that have target audiences that share one or more common attributes. As another alternative, data that are analyzed or graphed may relate to just a subset of all users (e.g., a group of users having one or more common attributes).

Returning to FIG. 2, in operation 206, results of the data analysis of operation 204, and/or other analyses, are used to determine a probability that a generic user could be expected to act upon a content item, based on historical actions of some (or all) users regarding some (or all) content items presented to them. In other words, based on how and when users in the past acted on content items, the likelihood that some other user would act upon a content item may be estimated or calculated.

This probability may be termed pCTR for probable (or predicted) Click-Through-Rate. In some embodiments of the invention, different pCTR values are calculated for different types or groups of users.

In particular, for users matching one set of attributes (e.g., between 26 and 30, male, working as software engineers), one probability may be calculated indicating their likelihood of acting on a content item having a particular set of attributes (e.g., target audience attributes). The probability may be calculated by considering out of all users having the first set of attributes that were presented a content item having the particular set of attributes, how many of the users acted on the content item. This type of calculation may be performed for any number of groups/classifications of users and for any number of groups/classifications of content items.

Also, however, in operation 206 a probability modifier is generated to modify a pCTR to account for the frequency (and/or recency) with which impressions of a particular content item were presented to a particular user. In the graph of FIG. 3A, for example, for the content items and user actions that produced the graph, most user activity happened between the $4^{th}$ and $6^{th}$ impression of a content item. Therefore, a highest or normalized likelihood (e.g., 1) may be assigned to the $4^{th}$, $5^{th}$ and $6^{th}$ impressions of one content item to one user. Lower probabilities may be assigned to other ordinal impressions.

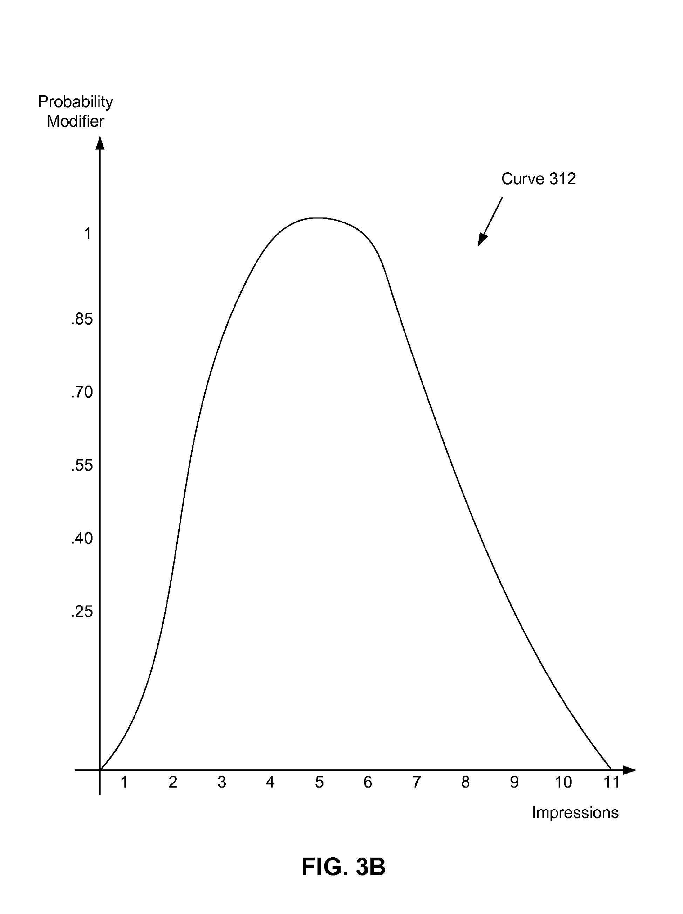

Generation of probability modifiers is illustrated in FIG. 3B, which reproduces the curve of FIG. 3A. However, the quantities or percentages of users that populated the y-axis in curve 302 have been mapped to probability modifiers that can be used to modify pCTR values. Each probability modifier may be proportional to the corresponding quantity (or percentage) of users graphed in curve 302. As described below, these modifiers may be used to modify estimated values or revenues of different content items, thereby altering their rankings and possibly determining which content items are selected for serving in response to a particular content request.

As seen in FIG. 3B, probability modifiers used in some embodiments of the invention may be normalized to fall between 0 and 1. For example, while modifiers between the $4^{th}$ and $6^{th}$ impressions of a content item may be at the maximum possible value, a modifier corresponding to the $2^{nd}$ impression may be calculated as 0.40, while a modifier of 0.70 may be associated with the $7^{th}$ impression, and so on.

In FIG. 2, the dashed line returning to operation 202 from operation 206 reflects the ongoing nature of the data collection and analysis. In some embodiments of the invention, such activity may occur continually or regularly. For example, data may be collected whenever content items are served. Logic may then execute periodically to analyze the data, update action likelihoods, calculate new or updated probabilities (or pCTRs) for different collections of content items and/or users, derive new or updated probability modifiers, test one or more modifiers during live operation of the content-serving system, etc.

In operation 208 of the method of FIG. 2, a new content request or query is received, for one or more content items to be presented to a specified user. The system may retrieve or receive a profile or set of attributes associated with the user.

In response to the request, the specified user's attributes and/or other information (e.g., attributes identifying target audiences of stored content items) are used to identify multiple candidate content items that could be served in response to the request.

Illustratively, attributes of target audiences of content items available for serving by the system may be compared to attributes of the specified user. Depending on how specific or narrow the attributes are, any number of candidate content items considered suitable for the user may be identified.

In operation 210, for some or all of the candidate content items, information indicating how many times each candidate content item has previously been served for presentation to the user is retrieved, such as from user store 128 of system 110 of FIG. 1. This information may cover all impressions served or presented to the user, or just impressions that occurred within some period of time (e.g., the last 30 days, the last 90 days).

In operation 212, estimated values or revenues of the candidate content items are calculated, and the items are ranked according to those values. Content items' estimated values, or revenues, may be calculated differently in different implementations, but will apply modified probabilities of user action as described above.

In some embodiments of the invention, a content item's estimated value V is calculated as

$$V = \text{bid} * \text{pCTR} * \text{modifier}$$

In these embodiments, a content item's "bid" is the amount that a sponsor or provider of the item will pay to the content-serving system (or an operator of the system) in return for serving/presenting the content item. The bid may be based on CPC (cost-per-click), CPM (cost-per-mil) or some other measure, which may require monitoring after the content is served (e.g., to determine whether the user clicked on it).

As described previously, a content item's pCTR is its probable or predicted click-through-rate, which may be defined as a simplistic probability that the user to whom the content item is presented will act on it. The pCTR value may be generated within or outside of the content-serving system, and may be calculated simply by determining a ratio (or percentage) of (a) users that acted on the content item to (b) all users to whom the content item was presented. In some implementations, only the actions of users that are similar to the target user of the current query (i.e., the specified user) may be considered in calculating or determining a pCTR, or when retrieving a stored pCTR, and/or only actions on content items similar to the candidate content item currently being valued.

One user may be considered similar to another if they share a threshold number of common attributes (e.g., age ranges, job titles, gender). Similarly, one content item may be considered similar to another if they (or their target audiences) share a threshold number of common attributes. Thus, in these implementations, when pCTRs are needed for calculating estimated values of candidate content items, the pCTRs may (or may not) be specific to particular groups or types of users and/or content items.

For example, if 1.3% of all users between the ages of 21 and 25 to whom an advertisement for a vacation package has been presented have clicked on the ad (or an announcement of a job opening for a reporter, or some other item), the corresponding pCTR (e.g., 0.013) may be used to calculate the estimated value of that item (and/or similar items) whenever it is a candidate to be served to a user having that attribute, even if the current user has seen the ad fifty times.

It may be noted that one problem with a pCTR is that it may be calculated without regard to how recently and/or frequently the target user was served an impression of the content item. In particular, the same pCTR may be used if the specified user has never received an impression of a particular content item before, or if he has received 30 impressions of the same content item in the last 2 hours.

Finally, the "modifier" for calculating a content item's estimated value is a probability modifier described above, which serves to modify or adjust the pCTR (and the estimated value) to account for how many times and/or how recently the content item has been presented to the specified user. The range of values of probability modifiers may vary from one implementation to another, such as 0.0 to 1.0, as shown in FIG. 3B, 0.1 to 2.0, etc.

By using a suitable modifier, if the specified user hasn't seen enough impressions yet to take note of the content item (or of something featured in the item), or if has seen so many impressions that they now annoy him, the resulting estimated value will reflect the fact that he is not very likely to act on a new impression, regardless of what the pCTR reports as the probability that the user will take action.

In sum, the probability represented by a pCTR may be derived from a correlation between attributes of a group of users and attributes of a content item considered for serving to a target user (or attributes of a target audience of the item), and may have no personal relation to the target user. In contrast, the proper probability modifier dynamically adjusts the pCTR (and estimated value) based on the user's current context, to account for how frequently (and/or recently) the content item was served to the user.

In an illustrative calculation of a content item's estimated value, the item's bid, such as $16.00 CPC, is multiplied by the appropriate pCTR, such as 0.015 (representing 1.5%), and the appropriate probability modifier, such as 0.9. These values may be dynamically computed or may be retrieved from a content server, content index, content repository, a tracking server, a tracking database or some other component. Any or all of them may reside in memory to avoid the delay in retrieving them from permanent storage.

In this example, the estimated value V = $16.00 * .0015 * 0.9 = $0.0216 (or 2.16¢). Thus, by modifying the content item's pCTR with the probability modifier according to the illustrated embodiment of the invention, a more realistic probability that the user will act on a new impression of the item is determined, and a more accurate estimated value can be derived.

In operation 214, after the candidate content items have been ranked according to their estimated values/revenues, the top N items are served in response to the content request, where N may be determined by the number of items requested to be served.

After operation 214, the illustrated method ends.

In the method of FIG. 2, all impressions of one content item to a given user may be considered equal, regardless of how prominently the impressions were presented. For example, the illustrated method of serving a content item may consider presentation of an impression placed at the top of a page of content to be equally significant as presentation of an impression at the bottom of the page.

In methods of serving a content item according to other embodiments of the invention, impressions of a content item may be weighted differently based on the prominence of the impression and/or other factors, such as size, permanence (e.g., how long it is presented), color, behavior (e.g., animation), the application or service that presented the page, etc.

In one implementation, presentation of a content item in the most prominent location of a page may be treated as a single impression, while presentations of the content item in less prominent locations may be treated as less than a full impression. For example, a banner location at the top of a page may equate to 1 impression, while an impression at the right-hand edge may be treated as 0.75 impression or 0.5 impression depending on whether it is closer to the top or bottom of the page, and an impression at the bottom of the page (which possibly is seen only if the user scrolls the page down), may be treated as 0.25 impression. In other implementations, weights may be assigned using some other scheme, such as awarding a value of 1 to impressions placed in the least prominent position and awarding to impressions in other positions values that are integer or decimal multiples of 1.

These weights may be applied or employed when assembling historical data, when analyzing the data, when calculating probability modifiers and/or when calculating estimated values of content items that are candidates for serving to a user.

For example, when collecting historical data regarding user actions on content item impressions, and/or determining probability modifiers, weights may be applied such that the $N^{th}$ time a particular content item is presented to a particular user only counts as the $M^{th}$ time (M < N), because some of the impressions were not in the most prominent location of a page.

In one implementation, each presentation of a content item may be represented by the weight corresponding to the position in which it was presented (e.g., 1, 0.75, 0.25). In this implementation, multiple presentations may therefore be required before the $1^{st}$ ordinal impression (or other ordinal impression) is counted. For example, two impressions placed in the least prominent position (e.g., a position having a weight of 0.25) plus one impression placed in a position of intermediate prominence (e.g., a position having a weight of 0.5) may, together, equal a single impression placed in the most prominent position.

Similarly, and as discussed above, when calculating one candidate content item's estimated value, in order to rank it for possible serving to a specified user, previous presentations of the item to the user are used to consider the current context and to calculate or determine a probability modifier. Some or all of those previous impressions may be weighted.

Thus, if four impressions had been presented, all at the top of pages of content, they may count as four full impressions and a probability multiplier corresponding to the $4^{th}$ ordinal impression may be read from a graph or from other stored data. However, if all four had been presented at the bottom of the pages, at locations having weights of 0.25, then the four impressions together may only count as one impression, and the modifier corresponding to the $1^{st}$ ordinal impression may be applied.

In some embodiments of the invention, probability modifiers are stored in a matrix, array or other data structure for easy retrieval, and may be derived from the frequency and/or recency of presentation of a set of content items - e.g., the total number of impressions presented, and how recently it was last presented. The data structure may be retained in memory to expedite the process of valuing content items and ranking them for selection in response to a content request, and may be continually or regularly updated as tracking data are collected and analyzed.

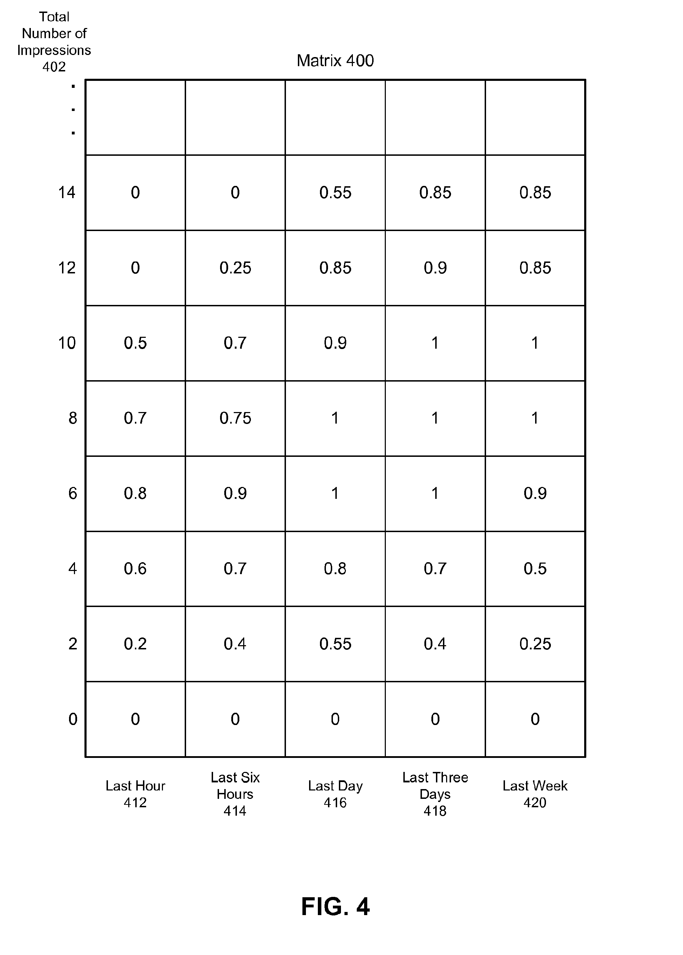

FIG. 4 illustrates a matrix used to store probability modifiers according to some embodiments of the invention. The modifiers may be used, as in the method of FIG. 2, to modify pCTRs and thereby also modify the estimated values or revenues of content items when they are considered for serving in response to a content request.

For example, after a request for content for presentation to a specified user is received, and when each candidate content item is being evaluated for serving in response to the request, the "modifier" for the estimated value equation above may be read directly from the table and applied to a pCTR to give it context.

In matrix 400, one dimension is populated with total numbers of impressions 402 (e.g., 0, 2, 4 and so on) presented during a default time period (e.g., 90 days), while the other is populated with multiple time spans 412 - 420 during which a most recent impression was presented. The default time period may match the time period during which tracking data were collected and analyzed in order to yield the probability modifiers, or some other time period (e.g., 30 days, 60 days). The indicated index values may vary from implementation to implementation, and are not limited to those indicated in FIG. 4.

As described above, in some implementations, the data may be derived from all user actions (e.g., clicks) on all content items during the default time period. In other implementations, the data may reflect just action taken by a group of users having a set of common attributes, and/or user actions on content items having a set of common attributes or having target audiences that have a set of common attributes. Yet further, an implementation of the matrix may be narrowed or tailored to capture just one user's experience.

The scope of a probability modifier may therefore differ from the scope of a pCTR that it is used to modify. While the pCTR may apply to a collection of users (and/or content items) having particular attributes, the probability modifier may be derived from a larger (or smaller) set of users and/or a larger (or smaller) set of content items.

In some embodiments of the invention, to retrieve the appropriate probability modifier, the cell is read that corresponds to the total number of previous impressions of the content item presented to that user and to the time-frame in which the most recent impression was served. Thus, if the content item had been served a total of 4 times to the user, with the most recent impression being in the last six hours, the appropriate modifier or action likelihood read from matrix 400 is 0.7.

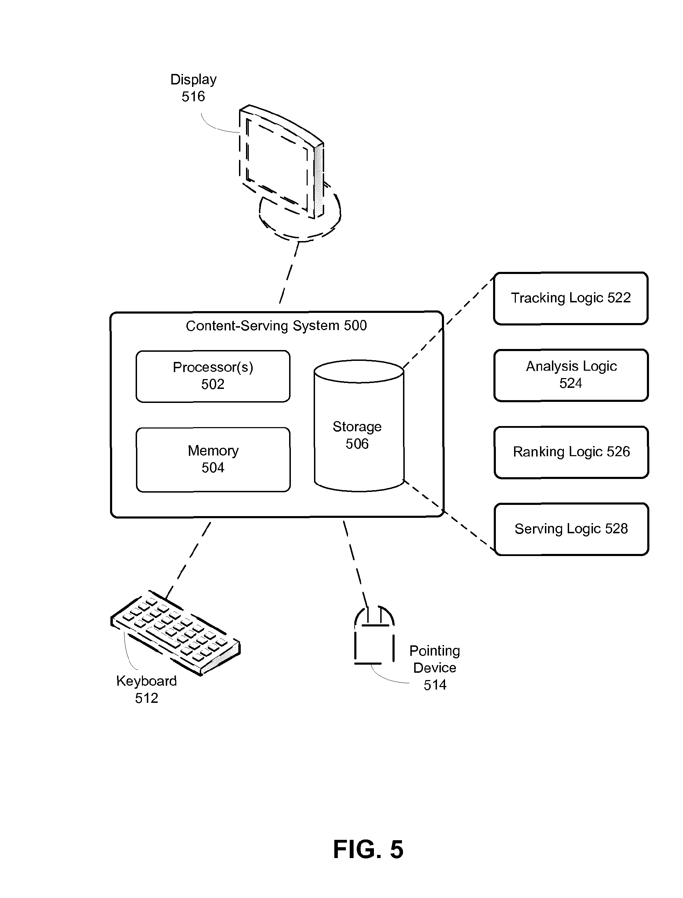

FIG. 5 is a block diagram of a system for serving electronic content, according to some embodiments of the invention.

Content-serving system 500 of FIG. 5 comprises processor(s) 502, memory 504 and storage 506, which may comprise one or more optical and/or magnetic storage components. Content-serving system 500 may be coupled (permanently or temporarily) to keyboard 512, pointing device 514 and display 516.

Memory 504 stores probability modifiers, pCTRs, bids, other data, and/or logic manipulated during operation of system 500. Storage 506 of the content-serving system stores content for serving to/for users, user data, tracking data and/or other information. Storage 506 also stores logic that may be loaded into memory 504 for execution by processor 502. Such logic includes tracking logic 522, analysis logic 524, ranking logic 526 and serving logic 528. In other embodiments of the invention, any or all of these logic modules or other content may be combined or divided to aggregate or separate their functionality as desired.

Tracking logic 522 comprises processor-executable instructions for tracking content requests received at system 500, tracking the serving of content items to users, tracking user actions on or regarding content items, and/or other behavior. Logic 522 may include, be accompanied by, or used to assemble data reflecting users' activity, content providers' activity and/or other aspects of the system.

Analysis logic 524 comprises processor-executable instructions for analyzing user activity, generating probabilities (e.g., pCTRs), probability modifiers and/or other data, and may be used to test newly generated data.

Ranking logic 526 comprises processor-executable instructions for ranking content items being considered for serving in response to a content request. Logic 526 may therefore retrieve content item bids, pCTRs, probability modifiers and/or other values, use them to compute content items' estimated values or revenues, and rank the items by the results.

Serving logic 528 comprises processor-executable instructions for handling and responding to content requests. Serving logic 528 may thus process a new request, search for content items suitable for serving in response and serve the selected (e.g., top-ranking) items.

## Managing the Serving of a Single Content Item to Extend its Budget

In some embodiments of the invention, a system and methods are provided for pacing the serving of sponsored content items having daily budgets (or budgets for other time periods), so that the content items are served throughout much of the time period covered by the budget, instead of being consumed during a relatively short portion of that period.

As indicated above, a "content item" for purposes of discussing embodiments of the invention may be a single item of content or may be a campaign comprising one or more items. Also, embodiments of the invention are described below as they may be applied to a content item have a daily budget. From these descriptions, other embodiments may be readily developed for other time periods.

In some embodiments, expenditure of a content item's periodic budget, via serving of impressions of the item, is paced. Without pacing, the budget for a content item that generates more revenue than other items may be expended within a relatively short period of time. For example, a content item having a high bid may tend to win many (or all) auctions until its budget is exhausted, will may occur shortly after the budget period begins. In this case, the content item would not be served to any users who come online later in the day.

In some embodiments of the invention, however, pacing is applied to forecast or plan the number of impressions of a content item that should be served, or are expected to be served, within different portions or intervals of the budget day. If too many impressions are served within a given fraction of the day, or by a selected time, serving of content item impressions in a later portion of the day may be retarded or throttled. Conversely, if too few impressions are served, the content item might be given extra emphasis so that more impressions will be served in a later portion of the day.

In these embodiments, pacing is applied by including a pacing factor when a content item is considered for serving in response to a request for content items. Illustratively, the pacing factor may be a pacing modifier applied in the calculation of the content item's estimated value, or a pacing probability applied to determine whether or not to even calculate the item's estimated value and let it compete to be served. Note that a pacing modifier is distinct from a probability modifier discussed in the preceding section.

The pacing modifier acts as a multiplier to increase (or decrease) a content item's estimated value, and therefore make it more (or less) likely to be ranked high enough to be served in response to a content request. If a pacing probability is employed (instead of or in addition to a pacing modifier), a random number is generated for a content item when it is identified as a candidate item to be served in response to a content request, and is compared to the probability. If the random number is less than or equal to the probability, the content item is permitted to compete with other items by having its estimated value calculated and by being ranked according to that value.

To apply pacing, a content-serving system generates a forecast, prediction or estimate regarding the expenditure of the content item's budget and/or the serving of impressions of a content item during one period (e.g., day). If the actual expenditure of the budget or the actual performance (i.e., serving of impressions) of the content item varies from the forecast, a suitable pacing factor is generated or modified to accelerate or decelerate the content item. In some embodiments of the invention, the number, frequency or pattern with which impressions of a given content item may be served during a budget day, and/or during a portion of a budget day, depends on a pattern of activity of the content item's target audience. In other words, the more activity there is for or by the target audience of a given content item, the more impressions of the item that should be served and the faster the item's budget should be spent.

In some embodiments of the invention, activity of a target audience may encompass visits by members of the audience to a web site hosted by or associated with the content-serving system, navigation to pages of such a web site, serving of content item impressions to members of the target audience, and/or other activity involving a member of the target audience.

In some implementations, a target or forecast number of impressions of a content item to be served during a portion or interval of its budget day is proportional to the amount or level of all activity during that interval by the content item's target audience. Illustratively, if the activity is concentrated during just a few hours, most impressions of the content item for the day will be forecast to occur during those hours. Thus, in these implementations, as the activity of a content item's target audience ebbs (or flows), the content-serving system will expect and support the serving more (or fewer) impressions of the content item. As will be described further below, the forecast activity by the item's target audience will be used to create a target profile that expects and allows more content item impressions to be served during busy portions of the day than during other periods. If actual activity varies, a pacing factor is applied to get the budget expenditure or content item performance back on-track.

In other implementations, a more even scheme may be applied, in which substantially equal numbers of impressions of a content item are allocated to each of multiple portions or intervals of the budget's time period. These implementations may be well-suited for content items whose target audiences maintain a relatively balanced level of activity throughout a day (e.g., instead of being concentrated within just a few hours). Illustratively, the larger a target audience, the more likely it is that the audience's activity will be relatively stable throughout a day.

In some implementations, the total number of impressions of the content item that must be served to completely consume the item's budget is calculated. The budget day is divided into a number of intervals, and the total number of impressions is divided among those intervals. If more than the number of impressions allotted to a period of time is served, a pacing factor is configured to retard the serving of content item impressions in a later period. Similarly, if fewer than allotted are served, a pacing factor is applied to promote the serving of more impressions later in the day.

As introduced above, a pacing modifier between zero and one is employed in the calculation of a content item's estimated value in order to slow it down. The resulting effect may be described as reducing the number of impressions of that content item that are served, reducing the rate at which they are served, or reducing the rate of expenditure (or overall expenditure) of the item's daily budget. A pacing modifier of zero may be applied if it is desired to (temporarily) prohibit impressions of the content item from being served.

A pacing probability between 0% and 100% will have a similar effect in slowing the content item, except that the content item does not even compete to be served. In situations in which only a relatively few candidate content items exist for a content request (i.e., few content items target the user to whom the requested content will be presented), it may be preferable to employ a pacing modifier for those items instead of a pacing probability, so as to avoid limiting the competition for serving.

To speed up or promote a content item, a pacing modifier greater than 1.0 may be applied to the item's estimated value calculation. Because a probability exceeding 100% would provide no advantage, in current implementations a pacing probability is not used when a content item must be sped up.

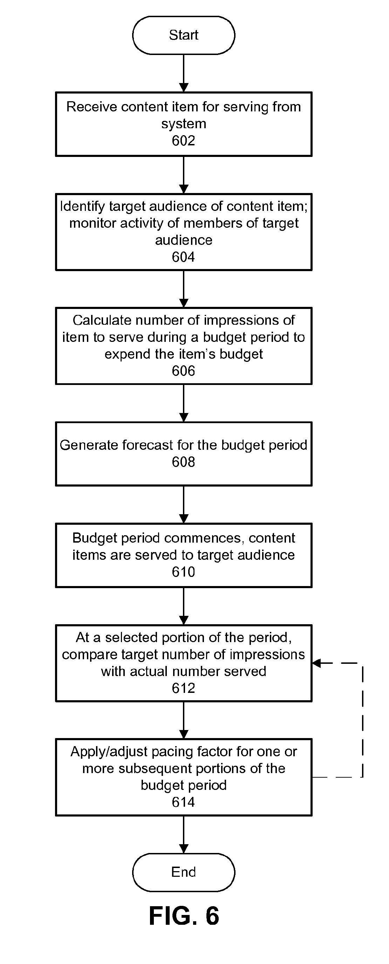

FIG. 6 is a flow chart illustrating a method of pacing the serving of a content item, according to some embodiments of the invention.

In operation 602, a content-serving system receives a new content item that will be served from the system. The content item may be a single item comprising one or more graphics, images and/or other components, or may be a campaign including one or more discrete items.

In operation 604, a target audience of the content item is identified. The audience may be identified as part of the process of receiving and registering the item, or may be received afterward. The target audience may change after it is received, as specified by a provider of the item.

In some implementations, the target audience is defined by one or more attribute/value pairs, each of which identifies one attribute of a user that the content item targets (e.g., industry, age, gender, geographic location, job, education, income, skills) and a corresponding value or set of values for that attribute.

Also in operation 604, activity of members of the target audience is monitored. Such monitoring may be designed to identify times at which the members connect (e.g., login) to the system and/or receive content, from the system, as they navigate through one or more web sites associated with the system. In particular, the system notes the times at which it receives (and/or responds to) requests for content items to be served to members of the target audience. In some implementations, this monitoring may be performed by profile server 114, tracking server 116 and/or content server 118 of FIG. 1.

Monitoring of user activity may be performed for any number of target audiences simultaneously, and those audiences may be defined with any desired granularity. For example, one target audience may be defined based on a single attribute, such as geographic location, industry in which they work, job title or description, and so on. Another target audience may be defined by two (or more) attributes, such as geographic location and industry, age and gender, etc.

Monitoring of a target audience may begin at any time, even before a content item targeting that audience is received, and may proceed indefinitely. Further, the data that is recorded regarding an audience's activity may be collected, divided and/or analyzed on any suitable time basis. Thus, a particular audience's activity on different days of the week, different days of a month, different hours of a day and so on. As a result, the system can determine, historically, the level or amount of user activity that occurred during any specific or general period of time.

In particular, and as described below, a content item's performance (or expenditure of its budget) may be examined at multiple times during a budget period, and compared to a forecasted performance (or pattern of budget expenditure) derived from the recorded history activity of the target audience. To assist in the generation of forecasts, and aid this examination, the historical data may be divided into corresponding portions or intervals of a day.

In operation 606, the number of impressions of the content item that must be served by the system in order to fully expend its daily budget (or other periodic budget) is calculated. Thus, if the provider of the content item bid $2 CPC (cost-per-click) for the item and specified a $1,000 daily budget, and it is estimated that 0.1% of users to whom an impression of the item is presented will click on the impression (i.e., the predicted click-through-rate is 0.1%), the system will need to serve approximately 500,000 impressions of the content item in order to fully consume the daily budget.

In operation 608, an estimate or forecast for the content item for a budget period is generated; as described below, it will be used to examine the content item's performance and the disbursement of its budget throughout the day.

The estimate is derived from historical data (i.e., past activity of the content item's target audience) and the content item's budget, and allows the system to allocate the budget through much or all of the budget period. For purposes of discussing the illustrated embodiment of the invention, the time period associated with the content item's budget will be assumed to be one day. Other budget periods (e.g., one hour, one week) may be applied in other embodiments of the invention.

To derive the estimate, for each of multiple intervals or portions of the day, the system calculates a target number of impressions of the content item to serve in that interval so as to allow the content item to be given its fair share of impressions expected to be served to the target audience during that interval. The target number of impressions for an interval will thus be proportional to the expected activity of the item's target audience during that time interval. In the illustrated embodiment of the invention, intervals are fifteen minutes long; in other embodiments, other durations may be implemented.

To determine the content item's target number of impressions for the each interval or portion of the day, the historical data captured in operation 604 is analyzed and used to construct a comparable historical day to use as a model. The model may be copied directly from a previous day corresponding to the day currently being forecast (e.g., if the forecast is being generated for a Thursday, the previous Thursday's historical data may be adopted as a model). Or, multiple comparable time periods (e.g., multiple weekdays, multiple Thursdays) may be averaged or combined in some other manner to generate the model. Just as target audience activity may be monitored for any period of time (e.g., one month, three months, a year), the model may reflect average activity over any time period.

The model identifies how many content item impressions the system expects to serve to the target audience during each interval of the forecast day. These values may be summed to identify the total number of impressions expected to be served to the target audience over the entire day.

After the model day is assembled, the content item's proportionate share of the day's content item impressions to be served to the target audience is calculated. From above, we know that the system estimates that it must serve approximately 500,000 impressions of the content item in order to generate enough clicks to expend its budget (assuming a cost-per-click payment basis). Assuming the total number of impressions the system expects to serve to the target audience during the forecast day is 400,000,000, the content item's share is 0.125% (i.e., 500,000 divided by 400,000,000).

This proportion is then applied to each interval of the model day in order to generate the estimate for the content item for the day being forecasted. In particular, for each fifteen minute interval of the day, the total number of impressions expected to be served to the target audience during that interval is retrieved from the model day and multiplied by 0.00125 to yield the content item's target number of impressions for the interval. For example, assuming that the model indicates that approximately 4,150,000 impressions are likely to be requested/served during a particular interval, the content item's forecast for that interval will be approximately 5,200 impressions.

In operation 610, the budget period (e.g., a Thursday) is underway and content is being served to the target audience as usual. The new content item's performance is also monitored, to record data such as when it is served, to whom, subsequent activity of the target audience member to whom it was served (e.g., whether he or she clicked on it), etc. The item's budget is also monitored, to determine if it is being disbursed as expected or if it is being consumed too quickly or too slowly.

As described in a previous section, when the system receives a request for content items to serve to or user, some number of content items that target that user is identified, their estimated values are calculated, they are ranked according to those estimated values, and one or more of them are served for presentation to the user. Calculation of a content item's estimated value may involve the bid placed by the item's provider, the predicted or probable click-through-rate (pCTR) of the item, and possibly a probability modifier reflecting a likelihood that the user will act on the content item. As discussed shortly, a pacing factor may now be added to the process.

In operation 612, at some point during the day on Thursday, the system compares, for a fraction of the day that has passed, the target number of impressions of the new content item that should have been served to the actual number of impressions of the item that have been served. This comparison may be performed during every interval - i.e., every fifteen minutes - or it may be performed with some other periodicity (e.g., every hour, every three minutes).

In the illustrated embodiment, the values that are compared are cumulative. That is, the sum of the content item's target number of impressions for every interval up to the time of the comparison is compared to the total number of impressions served since the day began.

In operation 614, if the actual performance leads (or lags) the target performance, pacing is applied to hamper (or hasten) the content item. As described above, accelerating the serving of the content item may involve applying a pacing modifier greater than 1.0 in the calculation of the content item's estimated value when it is a candidate to be served in response to a request for content items.

Retarding the content item may involve applying a pacing modifier less than 1.0 and/or using a pacing probability to determine whether the content item may even compete for serving in response to a request for content items.

After operation 614, the illustrated method may return to operation 612 to once again examine the content item's performance, and further adjust or cancel any pacing, or may end.

In some embodiments of the invention reflected in FIG. 6, a daily budget period was divided into intervals or portions fifteen minutes long, and a content item's performance was examined in one or more of those intervals. In some other embodiments, an item's performance may be examined multiple times during a single portion of the budget period. For example, an interval may still comprise fifteen minutes, but the item's performance may be examined every three minutes or five minutes. This may allow faster adjustment, or pacing, of the serving of the content item if its actual performance strays from its target performance. In these other embodiments, of course, data regarding historical activity of the target audience is obtained or derived with the granularity needed to support the pacing.

Also, although the entire forecast day was constructed ahead of time in the method of FIG. 6, in other embodiments, portions of the forecast day may be generated during the day. For example, each forecast interval may be derived shortly before the interval begins (e.g., one interval beforehand, one hour beforehand), and may use historical data gathered up to that point in time.

Yet further, actual activity of the target audience may be monitored, and the forecast day adjusted if the actual target audience activity varies from the original forecast by more than a threshold. Thus, if the audience activity is substantially greater than or less than the original forecast, the forecast may be adjusted to reflect it, which may increase or decrease the content item's target number of impressions for one or more intervals.

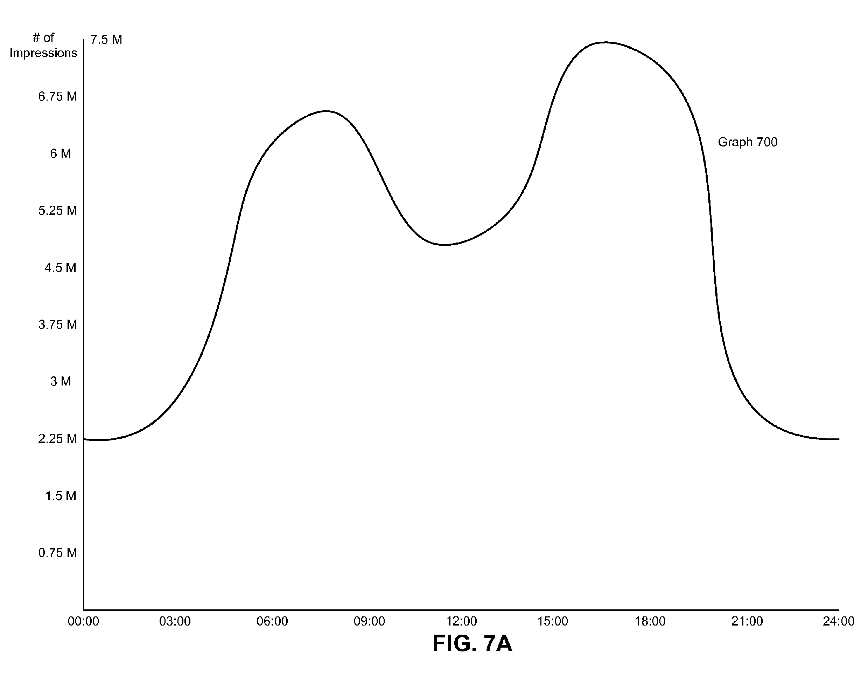

FIG. 7A is a graph of the estimated or predicted activity of a target audience for one daily budget period, in accordance with some embodiments of the invention. In these embodiments, the activity comprises serving a content item to a member of the audience. Thus, the numbers in the y-axis represent how many impressions of content items are expected to be served to members of the audience at the times indicated in the x-axis.

The data points plotted to form graph 700 are of the form (*time, impressions*) and occur with fifteen minute intervals. That is, each data point represents the number of impressions the system estimates it will serve to target audience members during the fifteen minute interval represented by the corresponding time.

In graph 700, the *time* value of a data point identifies the start, end, midpoint or other point within the fifteen minute interval. The *impressions* graphed for the data point indicate the total number of impressions served during the fifteen minute interval. In other embodiments, data points may be graphed for other time intervals and the impressions may have other significance. For example, in an embodiment in which a content item's actual performance is examined more often than every fifteen minutes, data points may graphed for shorter intervals (e.g., five minutes). Regardless of the intervals or periods of time used in plotting graph 700, the area under the graph is equal to, or substantially equal to, the total number of impressions expected, estimated or predicted to be served to the target audience throughout the day (e.g., four hundred million).

As described above, target audience activity may be monitored over any period of time in order to support the generation of estimates regarding future activity, but the data used to generate the graph of estimated activity will be for a comparable period of time. Thus, if graph 700 is for a Thursday, the data from which the graph is derived may be from previous Thursdays. In other implementations, the data may be less related. For example, the average of multiple weekdays (not just Thursdays) may be used.

The target audience reflected in graph 700 of FIG. 7A encompasses people having one or more attributes in common, such as the industry in which they work, their geographic location or locale, their jobs, their ages, their genders, etc. In different embodiments of the invention, a target audience may be defined with high resolution (e.g., multiple common attributes), which may cause it to be relatively small in size, or with low resolution (e.g., few common attributes, one common attribute), in which case it may be relatively large. A given target audience may therefore encompass any subset of all users served by the content-serving system.

In some embodiments of the invention, multiple forecasts of estimated activity will be generated for a given period, and will be compared to actual activity during that period to determine which forecast was most accurate. Over time, it may be determined that estimates for one target audience, such as an audience defined by industry and geographic location, are relatively accurate, while estimates for another target audience, such as one defined by age and job title, are relatively inaccurate.

Subsequently, when a graph of estimated activity is needed for a particular content item that targets multiple attributes, such as age, industry and job title, the forecast that is generated may reflect attributes that have previously yielded relatively accurate results. For example, the system may generate a forecast for an audience defined solely by the content item's target industry (or industries), without considering the age and job title attributes.

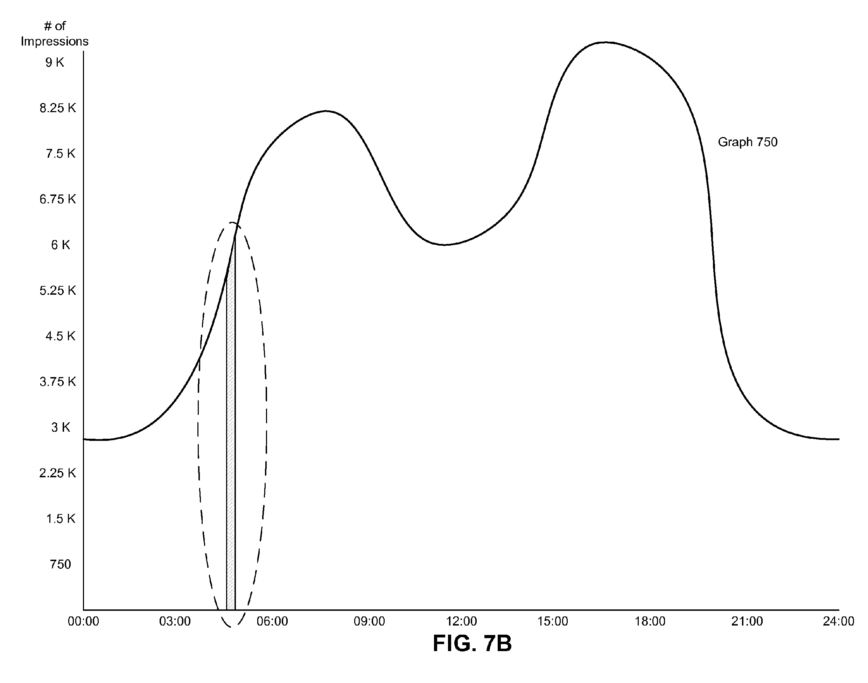

FIG. 7B is a graph of a target pattern of expenditure of the daily budget of a content item having the target audience reflected in graph 700 of FIG. 7A, in accordance with some embodiments of the invention. Graph 750 mimics graph 700, but with a different scale, indicated by the index values of the y-axis.

In particular, graph 750 applies the proportion used in the example scenario discussed in relation to the method of FIG. 6, wherein an illustrative content item's proportionate share of impressions to be served to the target audience was 0.125%. For each interval or portion of the day represented by the graph, the content item's target number of impressions to be served is equal to 0.125% of the total number of impressions to be served to the target audience during that time. Regardless of the intervals or portions of time used in plotting graph 700 or in examining the content item's performance (e.g., fifteen minutes, five minutes, one hour), the area under the graph is equal to, or substantially equal to, the total number of impressions the system estimates it must serve in order to exhaust the content item's budget (e.g., five hundred thousand).

One fifteen minute interval of the daily period is highlighted in FIG. 7B, from approximately 04:45am to approximately 05:00am. In this example, the midpoints of the fifteen minute intervals are graphed with the interval's corresponding target number of impressions, and the highlighted interval corresponds to approximately 5,800 impressions.

In some embodiments of the invention, the value of a pacing modifier or pacing probability is proportional to the ratio of the content item's actual performance to its target performance, or the ratio of how much of its budget has been expended to how much was expected to be expended. Further, the item's performance is checked multiple times during the budget period (e.g., every fifteen minutes, every five minutes), and the creation or adjustment of a pacing factor depends on the cumulative difference. The pacing factor therefore fluctuates accordingly, meaning that it may increase or decrease every time the content item's performance is examined, based on the performance up to that point of the budget period.

As an example, suppose the actual number of impressions of the content item until the fifteen minute interval highlighted in FIG. 7B has matched (or been within some tolerable degree of variation from) the estimated or forecast performance of 69,000, for example. Now assume that the actual number of impressions served during the highlighted interval is 8,400, that the interval's target was 5,800, and that the content item's performance is being examined at the end of the interval.

The total number of impressions (77,400) is approximately 103% of the target (74,800). In order to throttle or hamper the content item during one or more subsequent intervals (e.g., until the actual performance again matches the target performance) a pacing modifier of approximately 0.966 (the reciprocal of 1.03) will be applied to the item's estimated value calculation when it is a candidate to be served. Alternatively, a pacing probability of approximately 96.7% may be applied. Thus, because the content item's actual performance slightly leads its target performance, the system applies a slight bias against serving the item.

If the pacing modifier or pacing probability is generated based on the content item's budget, instead of its performance (e.g., number of impressions served), the system may compare the actual budget expenditure up to the end of the fifteen minute interval to what would have been expended if the target number of impressions and the predicted click-through-rate were accurate.

For example, suppose the total daily budget for the content item is $1,000, and adherence to the forecast would have expended $200 by the end of the highlighted interval, but that actually $250 had already been spent. This means that there have been 125 clicks on content item impressions instead of just 100, assuming that the cost per click is $2. This also means that only $750 of the day's budget remains, instead of $800.

To promote distribution of the rest of the budget over the remaining portion of the day, while still allowing for the expected pattern of target audience activity, a pacing modifier of approximately 0.9375 (i.e., $750 divided by $800) or a pacing probability of approximately 93.75% will be applied to pace the serving of impressions of the content item. As already explained, the pacing factor may be adjusted throughout the rest of the day as the content item's performance and budget expenditure are re-examined. This method of determining a pacing factor thus looks ahead to the rest of the budget period.

In some other implementations, the pacing factor may be calculated looking backward, at the actual expenditure versus the forecasted expenditure, instead of looking forward. In these implementations, a pacing modifier for the scenario described immediately above may be calculated as 0.8 (i.e., the reciprocal of $250 divided by $200) or a pacing probability may be set at 80%.

Because a primary objective of these embodiments of the invention is to pace the expenditure of a content item's budget through much or all of the budget period, calculating a pacing factor using budget expenditure (looking forward or backward) may provide a more satisfactory result than using the content item's performance (i.e., actual impressions versus target performance).

In some embodiments of the invention, a pacing factor is applied only when a content item's actual performance or actual budget expenditure varies from its target performance or target budget expenditure by a threshold amount (e.g., 2%, 5%).

An estimate or forecast of a content item's performance or expenditure of its budget may be generated any amount of time before the time period covered by the estimate. Thus, as in FIG. 7B, a forecast may be generated for an entire budget period. As one alternative, estimates for each interval or portion of a period may be generated separately, at any time before the interval.

For example, instead of generating the entire curve 700 of FIG. 7A or curve 750 of FIG. 7B before 00:00 of the corresponding day, each fifteen minute interval's estimate may be generated shortly before the interval. In this implementation, an interval's estimate can reflect actual target audience activity, actual content item performance or actual budget expenditure almost up to the start of the interval.

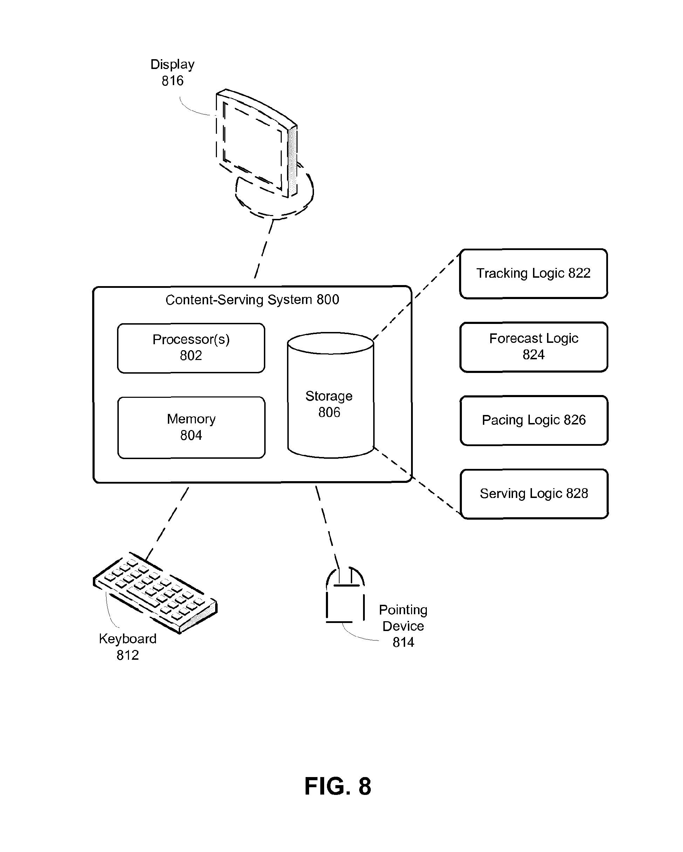

FIG. 8 is a block diagram of a system for serving electronic content, according to some embodiments of the invention.

Content-serving system 800 of FIG. 8 comprises processor(s) 802, memory 804 and storage 806, which may comprise one or more optical and/or magnetic storage components. Content-serving system 800 may be coupled (permanently or temporarily) to keyboard 812, pointing device 814 and display 816.

Memory 804 stores content item bids, pCTRs, pacing factors, probability modifiers, other data, and/or logic manipulated during operation of system 800. Storage 806 of the content-serving system stores content for serving to/for users, user data, tracking data and/or other information. Storage 806 also stores logic that may be loaded into memory 804 for execution by processor 802. Such logic includes tracking logic 822, forecast logic 824, pacing logic 826 and serving logic 828. In other embodiments of the invention, any or all of these logic modules or other content may be combined or divided to aggregate or separate their functionality as desired.

Tracking logic 822 comprises processor-executable instructions for tracking content requests received at system 800, tracking the serving of content items to users, tracking user activity regarding content items, and/or other behavior. Logic 822 may include, be accompanied by, or used to assemble data reflecting users' activity, content providers' activity and/or other aspects of the system.

Forecast logic 824 comprises processor-executable instructions for analyzing historical user activity and generating forecasts of future activity and performance of content items. Logic 824 may thus be used to assemble models of target audience activity and generate target performances of content items intended for that audience.

Pacing logic 826 comprises processor-executable instructions for determining when and how to apply pacing to a content item's budget. Logic 826 may therefore compare the item's target and actual performances, compare actual expenditure of the item's budget to target or forecast expenditure, and generate or adjust a pacing factor to affect the content item's performance by helping it to be served more often or by causing it to be served less often.

Serving logic 828 comprises processor-executable instructions for handling and responding to content requests. Logic 828 may thus process a new request, search for content items suitable for serving in response, calculate items' estimated values and serve the selected (e.g., top-ranking) items. Serving logic 828 may apply a pacing factor supplied by pacing logic - either a pacing probability for determining whether a content item can compete for serving in response to a request, or a pacing modifier for modifying the item's estimated value.

In some embodiments of the invention, system 500 of FIG. 5 and system 800 of

FIG. 8 are combined to form a content-serving system configured to manage the serving of content items to both avoid serving any item to a single user too frequently and to pace an item so that its budget will last for most or all of the budget period (e.g., one day).

The environment for the approach described herein may incorporate a general-purpose computer or a special-purpose device such as a hand-held computer or communication device. Details of such devices (e.g., processor, memory, data storage, display) have been omitted for the sake of clarity.

Data structures and program code described in this detailed description are typically stored on a non-transitory computer-readable storage medium, which may be any device or medium that can store code and/or data for use by a computer system. Non-transitory computer-readable storage media includes, but is not limited to, volatile memory, non-volatile memory, magnetic and optical storage devices such as disk drives, magnetic tape, CDs (compact discs), DVDs (digital versatile discs or digital video discs), or other non-transitory computer-readable media now known or later developed.

The methods and processes described in the detailed description can be embodied as code and/or data, which can be stored in a non-transitory computer-readable storage medium as described above. When a processor or computer system reads and executes the code and/or data stored on the medium, the processor or computer system performs the methods and processes embodied as data structures and code and stored within the medium.

Furthermore, the methods and processes described below can be included in hardware modules. For example, the hardware modules may include, but are not limited to, application-specific integrated circuit (ASIC) chips, field-programmable gate arrays (FPGAs) and other programmable-logic devices now known or later developed. When the hardware modules are activated, the hardware modules perform the methods and processes included within the hardware modules.

The foregoing descriptions of embodiments of the invention have been presented for purposes of illustration and description only. They are not intended to be exhaustive or to limit the invention to the forms disclosed. Accordingly, many modifications and variations will be apparent to practitioners skilled in the art. The scope of the invention is defined by the appended claims and their equivalents.

**Clauses**

1. A method of pacing the serving of electronic content, the method comprising:

constructing a model budget period for a content item having a target audience, wherein:

the model budget period reflects activity of the target audience during one or more past budget periods; and
the model budget period has an associated model total number of impressions (MT) identifying a total number of content item impressions served to the target audience during the model budget period;

calculating a target total number of impressions (TT) of the content item to serve during a future budget period in order to exhaust a budget of the content item for the future budget period;
calculating a ratio (R) of the target total number of impressions TT to the model total number of impressions MT;
for each of multiple time intervals of the future budget period, forecasting a number of impressions of the content item to be served to the target audience during the interval; and
during the future budget period:

after a plurality of the time intervals, comparing actual expenditure of the budget to a forecast expenditure of the budget; and
if the actual expenditure differs from the forecast expenditure by more than a threshold, applying a pacing factor in one or more subsequent intervals to alter a frequency of serving impressions of the content item to the target audience.

2. The method of clause 1, wherein said forecasting a number of impressions of the content item to be served to the target audience during the interval comprises:

multiplying a model number of content item impressions (MI) served to the target audience during a corresponding interval of the model budget period by ratio R, to yield a target number of impressions of the first content item (TI) to serve during the interval.

3. The method of clause 1 or 2, wherein said comparing actual expenditure of the budget to the forecast expenditure of the budget is performed at least one during every interval.

4. The method of any preceding clause, wherein said applying a pacing factor comprises:

generating a pacing modifier proportional to the ratio of the forecast expenditure of the budget to the actual expenditure of the budget; and when calculating an estimated value of the content item in response to a request for content, multiplying the estimated value by the pacing modifier.

5. The method of clause 1, wherein said applying a pacing factor comprises:

generating a pacing probability proportional to the ratio of the forecast expenditure of the budget to the actual expenditure of the budget; and upon receipt of a request for content to serve to a member of the target audience:

generating a random number; and only if the random number falls within the pacing probability, calculating an estimated value of the content item and comparing the calculated estimated value to estimated values of other content items in order to identify one or more content items to serve in response to the request for content.

6. The method of any preceding clause, wherein application of said pacing factor increases a likelihood of the content item being served in response to a request for content to serve to a member of the target audience if the forecast expenditure of the budget exceeds the actual expenditure of the budget.

7. The method of any of clauses 1 to 5, wherein application of said pacing factor decreases a likelihood of the content item being served in response to a request for content to serve to a member of the target audience if the actual expenditure of the budget exceeds the forecast expenditure of the budget.

**Claims**

1. A method of serving electronic content items, the method comprising:

estimating a number of impressions of a first content item to be served during a first fraction of a budget period;
comparing the estimated number of impressions to an actual number of impressions of the first content item served during the first fraction of the budget period; and
if the actual number of impressions differs from the estimated number of impressions, applying a pacing factor in a subsequent fraction of the budget period to pace the serving of impressions of the first content item.

2. The method of claim 1, wherein said estimating comprises:

identifying a target audience of the first content item;
for a past period of time comparable to the budget period, aggregating activity of the target audience to yield a model budget period having a model total number of content item impressions served to the target audience (MT);
from a budget of the first content item for the budget period, calculating a target total number of impressions of the first content item (TT) that, if served during the budget period, is estimated to consume the budget; and
calculating TT ÷ MT to yield the first content item's proportion (CP) of content item impressions to be served to the target audience during the budget period.

3. The method of claim 2, wherein said estimating further comprises, for each of multiple intervals of the model budget period:

identifying a model number of content item impressions (MI) served to the target audience during the interval of the model budget period; and
calculating MI x PS to yield the first content item's target number of content item impressions (TI) to be served to the target audience during the corresponding interval of the budget period;
wherein the first fraction of the budget period comprises one or more intervals; and
wherein the estimated number of impressions of the first content item to be served during the first fraction of the budget period is the sum of TI of each of the one or more intervals.

4. The method of claim 3, wherein:

the budget period is a day of the week;
said aggregating comprises averaging, over multiple weeks, past activity of the target audience during the same day of the week as the budget period; and
each interval is approximately fifteen minutes in duration.

5. The method of any preceding claim, wherein said applying a pacing factor comprises:

calculating a ratio of the actual number of impressions to the estimated number of impressions;
calculating a reciprocal of the ratio; and
during the subsequent fraction of the budget period, multiplying an estimated value of the first content item by a pacing modifier derived from the calculated reciprocal;
wherein said estimated value is used to rank the first content item with other content items to determine which content items to serve in response to a request for content.

6. The method of any of claims 1 to 5, wherein said applying a pacing factor comprises:

calculating a ratio of the actual number of impressions to the estimated number of impressions;
calculating a reciprocal of the ratio; and
during the subsequent fraction of the budget period:

generating a random number; and
calculating an estimated value of the first content item and considering the first content item for serving in response to a request for content only if the random number is within a range of values associated with a pacing probability derived from the calculated reciprocal.

7. The method of any preceding claim, wherein said pacing factor is applied only if the actual number of impressions differs from the estimated number of impressions by at least a threshold amount or percentage.

8. A method of pacing the serving of electronic content, the method comprising:

constructing a model budget period for a content item having a target audience, wherein:

the model budget period reflects activity of the target audience during one or more past budget periods; and
the model budget period has an associated model total number of impressions (MT) identifying a total number of content item impressions served to the target audience during the model budget period;

calculating a target total number of impressions (TT) of the content item to serve during a future budget period in order to exhaust a budget of the content item for the future budget period;
calculating a ratio (R) of the target total number of impressions TT to the model total number of impressions MT;
for each of multiple time intervals of the future budget period, forecasting a number of impressions of the content item to be served to the target audience during the interval; and
during the future budget period:

after a plurality of the time intervals, comparing actual expenditure of the budget to a forecast expenditure of the budget; and
if the actual expenditure differs from the forecast expenditure by more than a threshold, applying a pacing factor in one or more subsequent intervals to alter a frequency of serving impressions of the content item to the target audience.

9. The method of claim 8, wherein said forecasting a number of impressions of the content item to be served to the target audience during the interval comprises:

multiplying a model number of content item impressions (MI) served to the target audience during a corresponding interval of the model budget period by ratio R, to yield a target number of impressions of the first content item (TI) to serve during the interval.

10. The method of claim 8 or 9, wherein said comparing actual expenditure of the budget to the forecast expenditure of the budget is performed at least one during every interval.

11. The method of any of claims 8 to 10, wherein said applying a pacing factor comprises:

generating a pacing modifier proportional to the ratio of the forecast expenditure of the budget to the actual expenditure of the budget; and
when calculating an estimated value of the content item in response to a request for content, multiplying the estimated value by the pacing modifier.

12. A non-transitory computer-readable medium storing instructions that, when executed by a processor, cause the processor to perform a method of serving electronic content items according to any preceding claim.

estimating a number of impressions of a first content item to be served during a first fraction of a budget period;

comparing the estimated number of impressions to an actual number of impressions of the first content item served during the first fraction of the budget period; and

if the actual number of impressions differs from the estimated number of impressions, applying a pacing factor in a subsequent fraction of the budget period to pace the serving of impressions of the first content item.

**13.** A system for serving electronic content, the system comprising:

a processor;

a repository of content items for serving in response to requests for content for presentation to users;

a data store storing past activity of multiple target audiences of the content items;

selection logic executable by the processor to identify a subset of the content items, including a first content item, suitable for serving to a first user in response to a request for content to present to the first user;

forecast logic executable by the processor to identify a target pattern of serving of impressions of the first content item during a budget period of the first content item; and

pacing logic executable by the processor to compare, during the budget period, an actual expenditure of a budget for the budget period to a forecast expenditure of the budget.

**14.** The system of claim 13, further comprising:

value estimation logic for calculating an estimated value of the first content item, wherein the estimation logic is configured to combine:

a bid offered by a provider of the first content item;

a base probability that the first user will act on the first content item if the first content item is presented to the first user; and

a pacing modifier reflecting a ratio of the forecast expenditure of the budget to the actual expenditure of the budget.

**15.** The system of claim 13, further comprising:

value estimation logic for calculating an estimated value of the first content item, wherein the estimation logic is configured to combine:

a bid offered by a provider of the first content item; and

a base probability that the first user will act on the first content item if the first content item is presented to the first user; and

a pacing probability reflecting a ratio of the forecast expenditure of the budget to the actual expenditure of the budget;

wherein the value estimation logic is executed in response to the request for content to present to the first user only if a random number generated after receipt of the request for content to present to the first user is within the pacing probability.

**Client Application 102**

**Front-End Server 112**

**Profile Server 114**

**Tracking Server 116**

**Content Server 118**

**Profile Database 124**

**Tracking Database 126**

**User Store 128**

**Content Store 130**

**System 110**

# FIG. 1

```
                    ┌──────────────┐
                    │    Start     │
                    └──────┬───────┘
                           │
                           ▼
          ┌─────────────────────────────────┐
          │  Collect data regarding serving of │
          │   content items and user actions  │◄─ ─ ─ ┐
          │              202                  │       │
          └─────────────────┬─────────────────┘       │
                            │                          │
                            ▼                          │
          ┌─────────────────────────────────┐         │
          │  Analyze collected data to identify when │ │
          │   users acted on served content   │       │
          │              204                  │        │
          └─────────────────┬─────────────────┘        │
                            │                           │
                            ▼                           │
          ┌─────────────────────────────────┐          │
          │   Determine probabilities and/or  │         │
          │ modifiers for determining the likelihood │  │
          │   a user will act on a content item │─ ─ ─ ─┘
          │              206                  │
          └─────────────────┬─────────────────┘
                            │
                            ▼
          ┌─────────────────────────────────┐
          │   Receive content request for a user; │
          │    Identify candidate content items │
          │              208                  │
          └─────────────────┬─────────────────┘
                            │
                            ▼
          ┌─────────────────────────────────┐
          │  Retrieve historical data regarding the │
          │    user and the candidate items   │
          │              210                  │
          └─────────────────┬─────────────────┘
                            │
                            ▼
          ┌─────────────────────────────────┐
          │   Calculate estimated values of the │
          │       items, and rank them        │
          │              212                  │
          └─────────────────┬─────────────────┘
                            │
                            ▼
          ┌─────────────────────────────────┐
          │ Serve the top N ranked content items; │
          │         record transaction        │
          │              214                  │
          └─────────────────┬─────────────────┘
                            │
                            ▼
                    ┌──────────────┐
                    │     End      │
                    └──────────────┘
```

# FIG. 2

FIG. 3A

**FIG. 3B**

Total
Number of
Impressions
402

Matrix 400

| | Last Hour 412 | Last Six Hours 414 | Last Day 416 | Last Three Days 418 | Last Week 420 |
|---|---|---|---|---|---|
| ⋮ | | | | | |
| 14 | 0 | 0 | 0.55 | 0.85 | 0.85 |
| 12 | 0 | 0.25 | 0.85 | 0.9 | 0.85 |
| 10 | 0.5 | 0.7 | 0.9 | 1 | 1 |
| 8 | 0.7 | 0.75 | 1 | 1 | 1 |
| 6 | 0.8 | 0.9 | 1 | 1 | 0.9 |
| 4 | 0.6 | 0.7 | 0.8 | 0.7 | 0.5 |
| 2 | 0.2 | 0.4 | 0.55 | 0.4 | 0.25 |
| 0 | 0 | 0 | 0 | 0 | 0 |

FIG. 4

Display
516

Content-Serving System 500

Processor(s)
502

Memory
504

Storage
506

Tracking Logic 522

Analysis Logic
524

Ranking Logic 526

Serving Logic 528

Keyboard
512

Pointing
Device
514

FIG. 5

Start

Receive content item for serving from system
602

Identify target audience of content item; monitor activity of members of target audience
604

Calculate number of impressions of item to serve during a budget period to expend the item's budget
606

Generate forecast for the budget period
608

Budget period commences, content items are served to target audience
610

At a selected portion of the period, compare target number of impressions with actual number served
612

Apply/adjust pacing factor for one or more subsequent portions of the budget period
614

End

**FIG. 6**

FIG. 7A

**FIG. 7B**

EP 2 757 516 A1

Display
816

Content-Serving System 800

Processor(s)
802

Memory
804

Storage
806

Tracking Logic 822

Forecast Logic
824

Pacing Logic 826

Serving Logic 828

Keyboard
812

Pointing
Device
814

FIG. 8

**Europäisches Patentamt**
**European Patent Office**
**Office européen des brevets**

# EUROPEAN SEARCH REPORT

**Application Number**

EP 13 17 1382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q30/02 |
| | | | **TECHNICAL FIELDS SEARCHED (IPC)** |
| | | | G06Q |

The present search report has been drawn up for all claims

| Place of search | Date of completion of the search | Examiner |
|---|---|---|
| The Hague | 18 February 2014 | Guenov, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

Europäisches
Patentamt

European
Patent Office

Office européen
des brevets

# EUROPEAN SEARCH REPORT

Application Number

EP 13 17 1382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |

TECHNICAL FIELDS
SEARCHED      (IPC)

The present search report has been drawn up for all claims

| Place of search | Date of completion of the search | Examiner |
|---|---|---|
| The Hague | 18 February 2014 | Guenov, Mihail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 705115 A